# EUROPÄISCHE PATENTSCHRIFT

(11) **EP 0 459 946 B1**
(45) Veröffentlichungstag und Bekanntmachung des Hinweises auf die Patenterteilung: **04.10.1995**
(21) Anmeldenummer: 91810381.3
(22) Anmeldetag: 21.05.1991
(51) Int. Cl.: G01M 15/00, G01L 9/08, G01L 23/10, G01P 15/09

(54) **Überwachungssystem, insbesondere für Motoren, Kompressoren und zyklisch arbeitende Maschinen**
Monitoring system, especially for engines, compressors and reciprocating machines
Système de surveillance, en particulier pour moteurs, compresseurs et machines productrices à travail cyclique

(30) Priorität: 31.05.1990 CH 1837/90
(43) Veröffentlichungstag der Anmeldung: 04.12.1991
(73) Patentinhaber: K.K. HOLDING AG, CH-8408 Winterthur (CH)
(72) Erfinder: Sonderegger, Hans-Conrad, CH-8413 Neftenbach (CH); Kuratle, Rolf, CH-8404 Winterthur (CH); Wolfer, Peter, CH-8450 Kleinandelfingen (CH)
(74) Vertreter: Schmidt, Horst, Dr.

(56) Entgegenhaltungen:
- EP-A- 0 351 038
- AT-B- 389 943
- DD-A- 236 242
- GB-A- 2 212 616
- US-A- 4 483 181
- US-A- 4 761 993

## Beschreibung

Die Erfindung betrifft eine Überwachungsvorrichtung für zyklisch arbeitende Maschinen, vorzugsweise Dieselanlagen, bestehend aus einer zwischen dem Zylinderdeckel und der Mutter einer Zylinderdeckelschraube unter Vorspannung gehaltenen Sensoreinrichtung, die Signale über wichtige Betriebsparameter zur Überwachung des Betriebes der Maschine liefert.

Es ist lange versucht worden, den Zylinderdruck mit piezoelektrischen und DMS-Sensoren direkt im Zylinder zu messen. Infolge von Verkokungen und Korrosionseinflüssen ist es jedoch nicht gelungen, einen Sensor zu bauen, der im Verbrennungsraum während der geforderten Betriebszeit von 4000 ... 8000 h mit der notwendigen Genauigkeit zuverlässig in Funktion bleibt. Es sind deshalb Überwachungssysteme gebaut worden, mit Drucksensoren ausserhalb des Brennraums, z.B. am Indizierstutzen, wie er heute noch jedem Dieselzylinder zugeordnet ist. Der Drucksensor wird dann über ein von Hand oder automatisch schaltendes Ventil von Zeit zu Zeit an den Zylinder angeschlossen. Dieses Pausen-Überwachungssystem kann aber kurzzeitig und plötzlich auftretende Phänomene nicht erfassen, welche u.U. von Bedeutung sein können. Es konnte sich deshalb wenig durchsetzen.

Ferner sind indirekt erfassende piezoelektrische Messysteme für den Zylinderdruck bekannt geworden (US-A-4 483 181), die die Dehnung von Zylinderdeckleschrauben erfassen. Diese Messysteme ergeben zwar sehr aussagekräftige Daten über den Zylinderdruckverlauf, doch ist die Bauhöhe zu gross, was besondere Montagemassnahmen erforderlich macht. Es wurde daher zur Verringerung der Einbauhöhe auch schon auf Messunterlagscheiben mit DMS zurückgegriffen, doch zeigte sich, dass diese Anordnungen für einen Dauerbetrieb nicht geeignet sind.

Aufgabe der Erfindung ist die Schaffung einer Überwachungsvorrichtung der eingangs erwähnten Art, die für Dauerbetrieb geeignet ist und aufgrund ihrer flachen Bauweise einfach montierbar und demontierbar ist.

Diese Aufgabe wird erfindungsgemäss durch die Merkmale des Patentanspruches 1 gelöst. Danach ist insbesodnere vorgesehn, dass die Sensoreinrichtung umfänglich einer von der Zylinderdeckelschraube durchsetzten Flachscheibe angeordnet ist. Von jedem Zylinderdeckel der zu untersuchenden Maschine, bei der es sich um einen Motor, Kompressor oder dgl. handeln kann, wird eine ausgewählte Zylinderdeckelschraube mit einer Messanordnung nach der Erfindung - nachfolgend auch kurz Dünnscheibensensor genannt - ausgerüstet, was normalerweise lediglich ein Auswechseln der vorhandenen Standard-Unterlagscheibe gegen einen Dünnscheibensensor bedeutet, da beide im wesentlichen die gleiche Einbauhöhe haben können. Danach wird die Mutter wieder mit dem normalen Drehmoment angezogen. Es ist damit ein sehr einfacher Einbau der Überwachungssensorik erreichbar, wobei keinerlei Nachbearbeitung erforderlich ist. Das Elastizitätsverhalten der Schraubverbindung bleibt ferner unverändert, da die Ringflachscheibe hinsichtlich ihrer elastischen Eigenschaften ähnlich wie die vorhandene Unterlegscheibe reagiert und aus Stahl bestehen kann. Es sollte eine Zylinderdeckelschraube mit einer Überwachungsvorrichtung ausgerüstet werden, die möglichst entfernt von den Nachbarnzylindern der Maschine liegt, um Interferenzen auf ein Minimum zu halten. Durch Aufnahme der Sollkraftkurven aller Zylinder für eine Reihe von Belastungszuständen im Neuzustand der Maschine oder nach Revision der Anlage und Eingabe der Daten in einen Computer ergibt sich eine elegante und zuverlässige Vergleichsmöglichkeit des jeweiligen Istzustandes mit dem Sollzustand, ohne dass die absolute Grösse des Zylinderdruckes vorausgesetzt werden muss. Damit ist eine Überwachungsmethode geschaffen, die durch fehlerhafte Indiziervorgänge nicht beeinträchtigt wird und über die gesamte Laufzeit von z.B. 4000-8000 Betriebsstunden einwandfrei arbeitet.

Es wird Anwender geben, welche die Zylinderkraftmessung in direkten Zusammenhang mit der Druckmessung im Zylinder bringen möchten. Dies ist möglich durch Vergleichsmessung mit dem an Indizierstutzen gemessenen Zylinderdruck. Dazu wird das Signal, das im Dünnscheibensensor gemessen wird, von Zeit zu Zeit, insbesondere nach jeder Motorenrevision, durch ein einfaches Kalibrierverfahren mit dem Zylinderdruck verglichen.

Für die Überwachungsfunktion genügt das Zylinderkraftdiagramm als Relativdruckdiagramm vollständig, da es alle Details des Zylinderdruckdiagramms wiedergibt.

Von Bedeutung für die Überwachung ist nur die relative zeitliche Änderung des Motorzustandes in der 4000...8000 h zählenden Betriebszeit. Von weiterer Bedeutung ist, dass jeder Zylinder überwacht wird.

Von ebensogrosser Bedeutung ist eine zuverlässig genaue OTP Marke, eingeblendet ins Datenerfassungssystem. Vorteilhafterweise wird diese Marke auf dem Schwungrad angebracht und bezieht sich die Marke auf den Zylinder, der diesem am nächsten liegt. Nur für diesen Zylinder wird sie ausgewertet.

Die Überwachungsvorrichtung kann zur Erfassung sowohl des Kraftdruckverlaufes als auch des Körperschalls der zu überwachenden Maschine oder beider Kenngrössen ausgelegt sein.

Zur Überwachung des Kraftverlaufs wird ein Frequenzbereich von 0,1-2 kHz ausgenützt; nur in Spezialfällen werden höhere Bereiche bis 5 kHz benötigt. Motorengeräusche, z.B. Schläge von Ventilen etc., die über Körperschall in die Sensoren gelangen, werden üblicherweise als Störungen aufgefasst. Weil die Frequenzbereiche von Körperschall etwa zwischen 3 ... 10 kHz liegen, können solche Störungen meist ausfiltriert werden.

Ist also in der forschungsmässigen Druckmesstechnik von Verbrennungsverfahren die Körperschallübertragung ein Hindernis, das mit allen Mitteln der Filtertechnik abblockiert wird, so soll erfindungsgemäss die Körperschallübertragung als zusätzliches und wichtiges Hilfsmittel zur Überwachung der Anlage beigezogen werden.

Zwar kann der Zylinderdruck als auch der Körperschall grundsätzlich mit einer Sensoreinrichtung, die nur scheibenförmige Kraftmesselemente aufweist, erfasst werden, doch wird üblicherweise der Körperschall mit Beschleunigungsaufnehmern gemessen. Die Sensoreinrichtung kann daher neben einer Vielzahl von scheibenförmigen Kraftmesselementen auch gemäss einer anderen Weiterbildung der Erfindung ein in einer oder mehreren Achsen empfindliches Akzelerometer umfassen. In diesem Fall ist das Akzelerometer mit den scheibenförmigen Kraftaufnehmern zu einer Einheit zusammengefasst. Damit können mit einer Montageeinheit und einem Verbindungskabel beide Messparameter: Zylinderkraft/Druck und Körperschall ausgewertet werden. Durch geeignete Filtertechnik können beide Parameter separiert werden, auch wenn sie mit derselben Messleitung zur Filter/Verstärkeranordnung geleitet werden.

Der Dünnscheibensensor gewährleistet volle Ankopplung an Körperschallgeräusche. Infolge der Montage desselben unter den Muttern der Zylinderdeckelschrauben entsteht eine luftspaltfreie, perfekte Anschlusszone an die Zylinderdeckeloberfläche, so dass eine verlustlose Einleitung von Körperschall sowohl des Zylinderdeckels als auch des Zylinders gewährleistet ist.

Damit können Öffnungs- und Schliesszeiten von Einspritzventilen sowie Ein- und Auslassventilen überwacht werden. Es sind aber auch 'Kolbenfresser' schon im Entstehungszustand erfassbar, da sie ein ganz spezielles Rattergeräusch erzeugen, das im oberen Frequenzbereich liegt.

Es ist somit ersichtlich, dass die Erfassung von Zylinderdruck- resp. Kraft und Motorgeräusch an *einer* Messstelle, die ideal für die Krafterfassung wie auch für perfekte Ankopplung an den Körperschall des Zylinders ist, die Substanz der Erfindung darstellt.

Erstmals ist damit ein universelles Monitoringsystem aufbaubar, das kontinuierliche Einsicht in die komplexen Funktionen einer Maschinen-Anlage ermöglicht.

Ausführungsbeispiele sollen die Erfindung näher darstellen. Es zeigen:
- Fig 1: Teilschnitt durch Zylinderdeckel mit Schraube und eingebautem Dünnscheibensensor
- Fig 2: Querschnitt durch Dünnscheibensensor
- Fig 3: Aufsicht auf Dünnscheibensensor nach Fig 2
- Fig 4: Zylinderdeckelschraube mit eingebautem Dünnscheibensensor
- Fig 5: Aufsicht auf Dünnscheibensensor nach Fig 4
- Fig 6: Querschnitt durch Accelerometer nach Fig 5
- Fig 7: Querschnitt durch Accelerometer nach Fig 5
- Fig 8: Querschnitt durch Accelerometer nach Fig 5
- Fig 9: Querschnitt durch Kraftmesselement nach Fig 5
- Fig 10: Aufsicht eines Dünnscheiben-Sensors mit nur Kraftmesselementen
- Fig 11: Auswertediagramm mit 2 separaten Messkanälen
- Fig 12: Auswertediagramm mit 2 Signalen auf gleichem Kanal
- Fig 13: Computerprotokoll-Beispiel
- Fig 14: Überwachungs-Fahrdiagramm-Beispiel

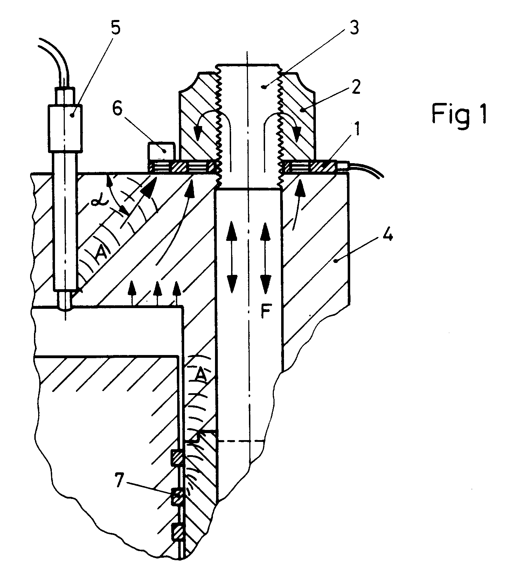

In Fig. 1 ist ein Teilschnitt eines Dieselmotoren-Zylinderdeckels gezeigt. Zwischen Mutter 2 und Zylinderdeckel 4 ist der Dünnscheibensensor 1 eingebaut, wodurch er unter hohe Vorspannung gesetzt wird und dadurch perfekte mechanische Verbindung mit dem Zylinderdeckel 4 erhält. Damit wird gewährleistet, dass Körperschall z.B. von der Einspritzdüse 5 oder von "fressenden" Kolbenringen 7 (Verkokte Ringe ohne Schmierung) verlustfrei in das den Körperschall messende Accelerometer 6 des Dünnscheibensensors 1 eintreten können. 3 bezeichnet die Zylinderdeckelschraube, welche den Zylinderdeckel 4 gegen den nicht eingezeichneten Motorblock mit einer Kraft F spannt. Diese Kraft F wirkt auch auf den Dünnscheibensensor 1 und erhöht sich durch die zusätzlich infolge des Zylinderdruckes wirkende Kraft F', welche durch Pfeile angedeutet ist. A kennzeichnet die dem Accelerometer 6 zugeführten Körperschallwellen, die unter dem Winkel a in die Aufnahmeoberfläche eintreten.

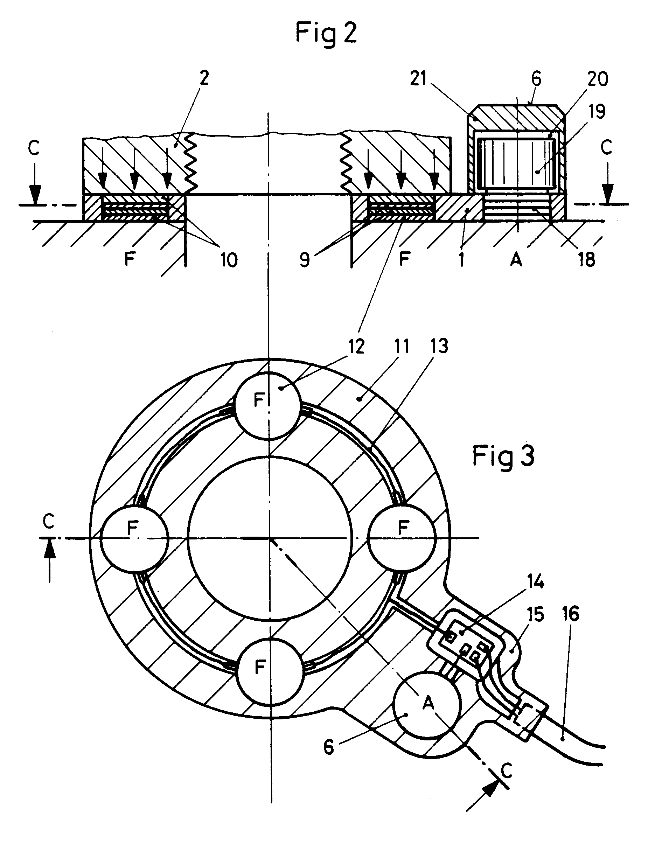

Fig. 2 zeigt einen vergrösserten Querschnitt durch einen erfindungsgemässen Dünnscheibensensor 1. Fig. 3 zeigt die entsprechende Aufsicht zu Fig. 2. Danach besteht der Dünnscheibensensor 1 aus einer dünnen gelochten Flachscheibe 11, in welcher eine Anzahl Kraftmesselemente 12 eingebaut sind. Diese Kraftmesselemente 12 sind piezoelektrischen Scheiben 9, die von Deck- und Grundplatten 10 abgedeckt sind.

Das Accelerometer 6 ist wegen der Bauhöhe ausserhalb der Mutter 2 angeordnet. Die Kraftmesselemente 12 sind über eine Signal-Ringleitung 13 mit dem Vorverstärker 14 verbunden. Das ausserhalb der Mutter 2 angeordnete Accelerometer 6 kann z.B. in das Anschlussgehäuse 15 integriert werden und leitet das Signal ebenfalls dem Vorverstärker 14 zu. Das Kabel 16 ist an die Ausgänge des Vorverstärkers 14 angeschlossen.

Das Accelerometer 6 besteht aus der Piezoanordnung 18, der seismischen Masse 19, der Feder 20 und dem Accelerometergehäuse 21. Es kann in einer oder mehreren Achsen empfindlich sein.

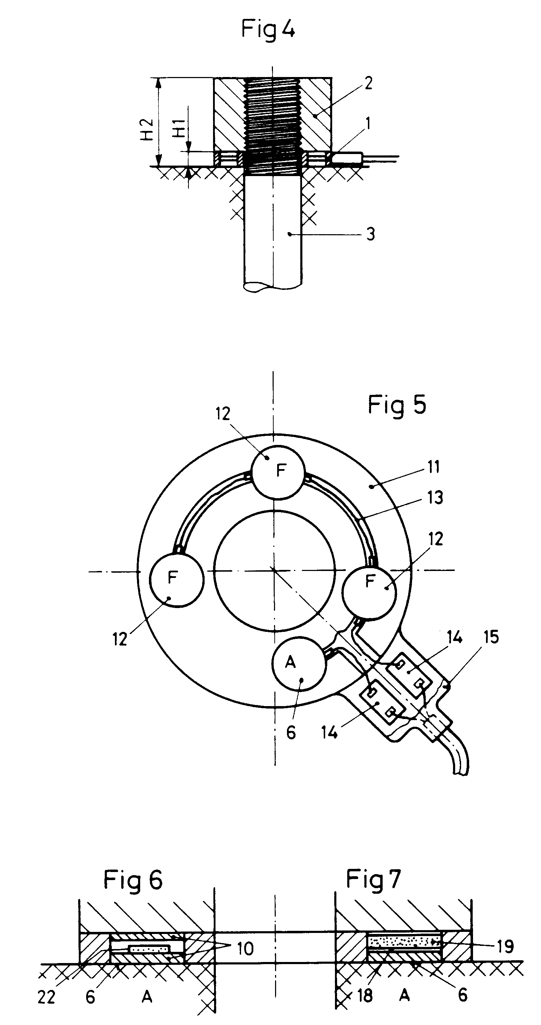

In den Fig. 4, 5, 6 und 7 sind sehr flach gebaute Accelerometer gezeigt, die sich auch unter der Mutter 2 anordnen lassen. Es sind dies z.B. Biegebalken-Accelerometer, die unter dem Handelsnamen 'Piezobeam' weite Verbreitung gefunden haben und in der Fachliteratur beschrieben sind.

Es können aber auch andere sehr flache Accelerometer, z.B. Siliziumchip-Accelerometer auf piezoresistiver oder kapazitiver Basis Anwendung finden. Für Dauerbetrieb haben sich aber bis heute nur piezoelektrische Accelerometer bewährt. Mit piezoelektrischen Folien sind ebenfalls sehr flache Accelerometer herstellbar.

Fig. 4 zeigt nochmals die Grössenverhältnisse von Dünnscheibensensor 1, Mutter 2 und Zylinder-Deckelschraube 3. Dabei beträgt die Höhe H1 des Dünnscheibensensors 1 höchstens 1/6 der Höhe H2 der Mutter 2. Dies hat sich als Richtlinie dafür ergeben, dass sich die Mutter 2 auch nach Montage des Dünnscheibensensors 1 noch voll belasten lässt. Vorteilhaft ist, wenn der Dünnscheibensensor 1 eine Standard-Unterlagscheibe ersetzen kann.

Fig. 5 zeigt die Aufsicht auf einen Dünnscheibensensor 1, bei dem alle Sensoren innerhalb der gelochten Flachscheibe 11 untergebracht sind, was, wie erwähnt, nur mit flachen Accelerometern möglich ist. Die Signale gehen dazu auf zwei separate Vorverstärker 14. Es sind hier drei parallel geschaltete Kraftsensoren und ein Accelerometer 6 vorgesehen.

Fig. 6 bis 9 zeigen Schnitte von Accelerometern und Kraftmesselementen nach Fig. 5. Fig. 6 zeigt ein Accelerometer 6 bestehend aus der Deck- und Grundplatten-Anordnung 10 und dem Silizium-Accelerometerchip 22.

Das Silizium-Element 22 hat eine sehr kleine seismische Masse und ist deshalb sehr flach.

Fig. 7 stellt ein sehr flaches piezoelektrisches Accelerometer 6 dar, bestehend aus Piezoscheibe 18 (zB Folie) und seismischer Masse 19.

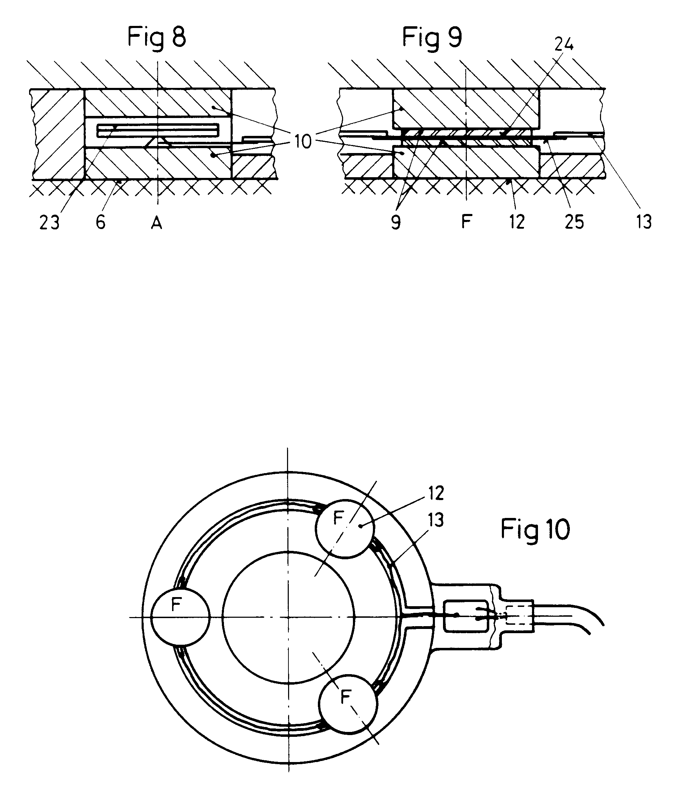

Fig. 8 zeigt ein Biegebalkenaccelerometer wie oben erwähnt, das aus der Deck- und Grundplattenanordnung 10 und dem Biegebalken-Schwingelement 23 besteht. Dies ist ein bimorpher Keramik-Piezobalken, in der Mitte gelagert und auf Körperschall hochempfindlich. Seine Signalableitung ist wesentlich einfacher als diejenige eines Silizium-Accelerometers. Deshalb ist ein Piezoaccelerometer auch betriebssicherer.

Fig. 9 zeigt eine Variante eines Kraftmesselementes 12 mit einer Elektrode 24 zwischen den piezoelektrischen Scheiben 9. Die Elektrode 24, als Folie gestanzt, hat Zwei Anschlusslappen 25, an welche die Signal-Ringleitung 13 angelötet oder geschweisst ist. Durch Verwendung von Piezoelementen für Kraftmessung und Körperschallmessung ergeben sich einfache und zuverlässige interne Signalleitungen, was ausschlaggebend für die geforderte Langzeit-Schwingungsbelastung ist.

Fig. 10 zeigt eine vereinfachte Form eines Dünnscheibensensors 1, der nur Kraftmesselemente 12 enthält. Wie früher erwähnt, nehmen auch Kraftmesselemente Körperschallsignale auf, welche dann dem Kraftmessignal überlagert sind. Durch passende Filteranordnungen können beide Signale sichtbar gemacht werden.

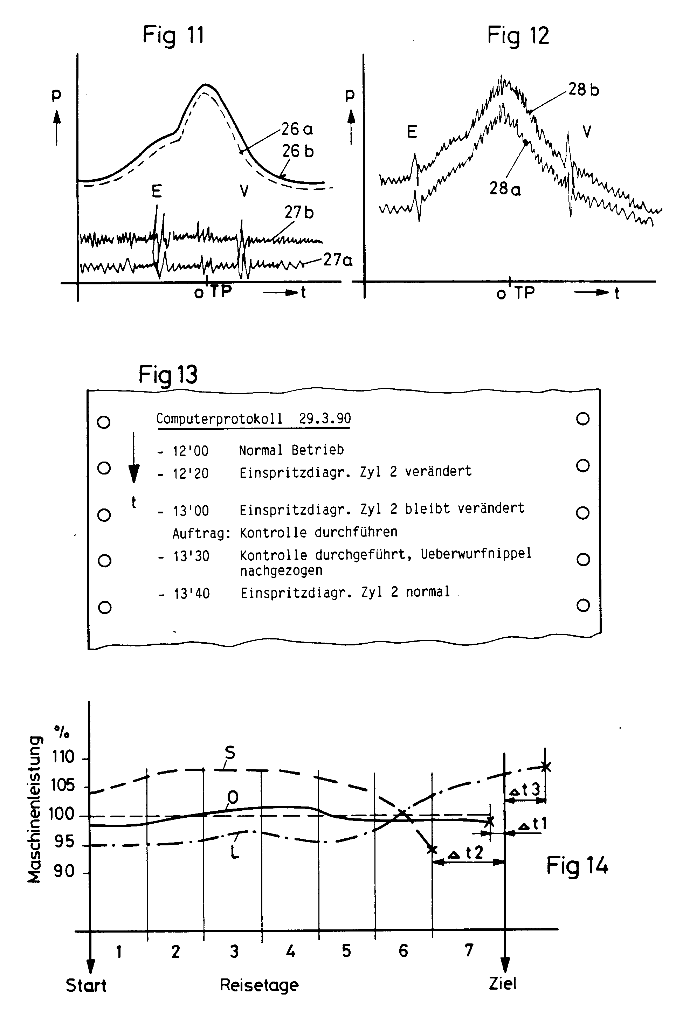

Fig. 11 zeigt ein p/t Diagramm, das mit einer Anordnung nach Fig. 5 aufgenommen wurde. Das Kraft-/Drucksignal 26b und das Körperschallsignal 27b sind getrennt ausgewertet. Durch Computerspeicherung kann das Original-Kraft/Drucksignal 26a, das nach Motorrevision aufgenommen wurde (Sollwert), jederzeit mit dem gegenwärtigen Ist-Wert 26b verglichen werden, was dem Fachmann oder der Überwachungs-Software Ansätze zur Beurteilung gibt. Die Stelle E zeigt den Auf/Abschlag des Einspritzventils. Die Stelle V deutet die Auslassventilöffnung an. Auch hier werden die Körperschallsignal-Sollwerte 27a mit Istwerten 27b verglichen. Daraus ergeben sich wichtige Zusatzinformationen zum Kraft/Drucksignal.

Fig. 12 zeigt ein p/t Diagramm, das mit einer Anordnung nach Fig 10 aufgenommen wurde. Kraft- und Körperschall sind in Signal 28b überlagert und können durch Filterung besser kennbar gemacht werden. Damit ist jedoch nur eine begrenzte Beurteilung möglich. 28a stellt das abgelegte Soll-Signal dar.

Fig. 13 zeigt ein Beispiel der Signalaufbereitung, wie sie durch geeignete Software im Computerprotokoll erscheint. Die Signale der beiden Messwerte werden laufend analysiert und durch die Software in entsprechende Befehle umgewertet. Damit können Kleinreparaturen laufend und zeitgerecht durchgeführt werden. Kontrolle, ob die Durchführung erfolgte und mit welchem Resultat, wird laufend festgehalten.

Fig. 14 zeigt ein Beispiel eines Überwachungs-Fahrdiagrammes, in dem Fahrziel und aufgewendete Maschinenleistung festgehalten sind.

Kurve 0 ist die Optimalführung des Schiffs mit einem Zielfehler Δ t (Eintreffen am Ziel ca. 5 h zu früh). Der Kapitän nach Kurve S wollte möglichst früh am Ziel sein, um Zeit für Erholung im Hafen zu finden, während der Kapitän nach Kurve L im ersten Teil der Fahrt zu sehr auf Optimal-Leistung fuhr und in den letzten 2 Tagen trotz Überlastleistung über 12 h zu spät eintraf.

Das dargestellte Überwachungssystem ergibt somit für die Schiffsführung wie auch für die Reeder ausserordentlich wichtige Informationen, die vor allem durch geplanten Kurzzeit- und Langzeit-Unterhalt sowie durch optimale Motorleistung neue ökonomische Grenzwerte erreichen lässt. Das Überwachungssystem wird sich deshalb in kurzer Zeit amortisieren.

Wie anfangs erwähnt, bezieht sich die erfindungsgemässe Anordnung nicht nur auf Schilfsantriebe. Alle Grossanlagen auf Bohrplattformen, Pumpenanlagen für Gasfernleitungen, stationäre Energieerzeugungs- und Wärmerückgewinnungsanlagen, lassen sich auf diese Weise überwachen. Ebenso lassen sich Spritzgiessmaschinen und Pressen überwachen, d.h. alle Maschinen mit zyklischen Arbeitsvorgängen.

Durch Verwendung von standardisierten Kraftmesselementen 12 und Accelerometern 6 lassen sich die erfindungsgemässen Dünnscheibensensoren auf einfache Weise an die Dimensionen der kundenseitigen Anlage anpassen. Mit der Anwendungszeit wird sich eine Baureihe von Dünnscheibensensoren ergeben.

## Patentansprüche

1. Überwachungsvorrichtung für zyklisch arbeitende Maschinen, vorzugsweise Dieselanlagen, bestehend aus einer im Verwendungsfall zwischen dem Zylinderdeckel (4) und der Mutter (2) einer Zylinderdeckelschraube (3) unter Vorspannung gehaltenen, von der Zylinderdeckelschraube durchsetzten, gelochten Flachscheibe (11), in der eine Sensoreinrichtung mit einer Anzahl piezoelektrischer Scheiben (9) als Kraftmesselemente (12) so eingebaut ist, dass kein Kraftmesselement (12) von der in der gelochten Flachscheibe (11) für die Zylinderdeckelschraube (3) vorgesehenen Öffnung durchsetzt ist.

2. Überwachungsvorrichtung nach Anspruch 1, dadurch gekennzeichnet, dass die Sensoreinrichtung (12) zur Erfassung sowohl des Kraftdruckverlaufes als auch des Körperschalls der zu überwachenden Maschine ausgelegt ist.

3. Überwachungsvorrichtung nach Anspruch 1 oder 2, dadurch gekennzeichnet, dass die Sensoreinrichtung eine Vielzahl von scheibenförmigen Kraftmesselementen (12) umfasst.

4. Überwachungsvorrichtung nach Anspruch 3, dadurch gekennzeichnet, dass die scheibenförmigen Kraftmesselemente (12) durch eine in der Flachscheibe (11) verlegte Signalringleitung (13) miteinander verbunden und durch die Ringflachscheibe voneinander in Abstand gehalten sind, so dass sie kraftmässig parallel zueinander liegen.

5. Überwachungsvorrichtung nach einem der vorhergehenden Ansprüche, dadurch gekennzeichnet, dass die Sensoreinrichtung zusätzlich zu den scheibenförmigen Kraftmesselementen (12) ein in einer oder mehreren Achsen empfindliches Akzelerometer (6) umfasst.

## Claims

1. Monitoring device for cyclically operating machines, preferentially diesel engines, comprising a holed flat washer (11) held in use under preload between the cylinder cover (4) ant the nut (2) of a cylinder cover stud (3), a sensor means having a number of piezoelectric disks (9) as force measuring elements (12) mounted to that flat washer such that no force measuring element (12) is crossed by the hole of the cylinder cover stud (3) provided in the flat washer (11).

2. Monitoring device according to Claim 1, characterized by the sensor means being designed to detect both the force pressure curve and the structure-borne sound of the machine being monitored.

3. Monitoring device according to Claim 1 or 2, characterized by the sensor means comprising a number of disk-shaped force measuring elements (12).

4. Monitoring device according to Claim 3, characterized by the disk-shaped force measuring elements (12) being connected with each other by a signal ring line (13) placed in the flat washer (11), and spaced apart from each other by said annular flat washer so that they are disposed parallel to each other forcewise.

5. Monitoring device according to one of the preceding claims, characterized by the sensor means including in addition to the disk-shaped force measuring elements (12) an accelerometer (6) responsive in one or more axes.

## Revendications

1. Dispositif de surveillance pour machines fonctionnant de façon cyclique, de préférence des installations Diesel, composé d'un disque plat (11) percé maintenu en utilisation sous précontrainte entre la culasse (4) et l'écrou (2) d'un goujon de culasse (3), traversé par le goujon de culasse, dans lequel un moyen de capteur pourvu d'un certain nombre de disques piézo-électriques (9) servant d'éléments de mesure de force (12), est monté de façon qu'aucun élément de mesure de force (12) ne soit traversé par le passage prévu dans le disque plat percé (11) pour le goujon de culasse (3).

2. Dispositif de surveillance selon la revendication 1, caractérisé en ce que le moyen de capteur est conçu pour relever tant l'évolution des contraintes que le bruit de structure de la machine à surveiller.

3. Dispositif de surveillance selon la revendication 1 ou 2, caractérisé en ce que le capteur comprend une pluralité d'éléments de mesure de force en forme de disques (12).

4. Dispositif de surveillance selon la revendication 3, caractérisé en ce que les éléments de mesure de force en forme de disques (12) sont reliés entre eux par une boucle de transmission de signaux (13) posée dans le disque plat (11) et sont maintenus espacés les uns des autres par le disque plat annulaire de façon qu'ils soient parallèles entre eux du point de vue des forces.

5. Dispositif de surveillance selon l'une quelconque des revendications précédentes, caractérisé en ce que le moyen de capteur comprend outre les éléments de mesure de force en forme de disques (12) un accéléromètre (6) sensible selon un ou plusieurs axe (6).
